# FASCICULE DE BREVET EUROPEEN

(11) **EP 3 849 845 B1**
(45) Date de publication et mention de la délivrance du brevet: **02.11.2022**
(21) Numéro de dépôt: 19769097.7
(22) Date de dépôt: 10.09.2019
(51) Int. Cl.: B60R 13/02, B60R 21/215

(54) **DISPOSITIF DE FIXATION D'UNE GARNITURE SUR UNE STRUCTURE DE CAISSE D'UN VEHICULE AUTOMOBILE TEL QU'UN MONTANT DE BAIE**
VORRICHTUNG ZUR BEFESTIGUNG EINER VERKLEIDUNG AN EINER KRAFTFAHRZEUGKAROSSERIESTRUKTUR WIE ETWA EINER FENSTERSÄULE
DEVICE FOR ATTACHING A TRIM TO A MOTOR VEHICLE BODYWORK STRUCTURE SUCH AS A WINDOW POST

(30) Priorité: 13.09.2018 FR 1858215
(43) Date de publication de la demande: 21.07.2021
(73) Titulaire: Renault s.a.s, 92100 Boulogne Billancourt (FR)
(72) Inventeur: BOUILLON, Jean-Charles, 78940 La Queue-lez-Yvelines (FR); HOELTZEL, Franck, 78330 Fontenay- le-Fleury (FR); CHABASSOL, Ludovic, 28210 Coulombs (FR)
(74) Mandataire: Renault Group
(86) Numéro de dépôt international: PCT/EP2019/074050
(87) Numéro de publication internationale: WO 2020/053184

(56) Documents cités:
- FR-A1- 2 784 637
- FR-A1- 2 980 758
- FR-B1- 2 784 637
- GB-A- 2 479 429

## Description

L'invention a pour objet un dispositif de fixation d'une garniture sur une structure de caisse d'un véhicule automobile, par exemple un montant de baie, notamment au niveau d'une zone logeant au moins une partie d'un dispositif de rideau gonflable.

Le document GB 2 479 429 divulgue un dispositif de fixation d'une garniture sur une structure de caisse d'un véhicule automobile, ledit dispositif de fixation comprenant une agrafe conformée pour loger au moins une partie d'un dispositif de rideau gonflable, dans lequel l'agrafe comprend : une première partie d'agrafe pourvue d'éléments de fixation à la structure de caisse, une deuxième partie d'agrafe pourvue d'éléments de fixation à la garniture, les deux parties d'agrafe étant reliées l'une à l'autre par des organes de verrouillage, les organes de verrouillage comprennent des pattes de verrouillage et des éléments de retenue des pattes de verrouillage engagés mutuellement dans une position fermée de l'agrafe, les pattes de verrouillage et les éléments de retenue étant solidaires de parties d'agrafe distinctes.

Dans la plupart des véhicules, des pièces d'habillage, appelées aussi garnitures, dissimulent un ou plusieurs éléments gonflables de protection latérale des passagers, couramment appelés rideaux gonflables.

Sous la garniture peuvent se trouver le rideau gonflable plié, en général enroulé sur lui-même, le dispositif de mise à feu, ainsi que des sangles destinées à retenir et à guider le positionnement du rideau gonflable dans le véhicule lors de son déploiement.

La garniture doit permettre au rideau gonflable et aux sangles de passer sans encombre de dessous la garniture vers l'intérieur de l'habitacle.

Les garnitures sont retenues sur une structure de caisse du véhicule à l'aide de pièces de fixations. Ces pièces de fixation doivent maintenir la garniture dans sa position passive d'habillage de l'habitacle, et le moment venu, doivent permettre de laisser passer le rideau gonflable. En outre, la sortie de ce dernier ne doit pas décrocher ou casser la garniture, qui doit rester solidaire au moins en partie de la structure de caisse.

Selon la configuration des véhicules, notamment lorsque la surface du pare-brise est importante, on peut être amené à utiliser des rideaux gonflables logés en partie derrière les garnitures des montants de baie et au dessus de l'habillage du pavillon. Dans cette configuration, les garnitures de montants de baie ont tendance à être éjectées vers l'intérieur de l'habitacle, ce qui n'est pas souhaitable.

Il existe des systèmes permettant d'éviter l'éjection de la garniture. La plupart de ces systèmes s'avèrent relativement complexes et couteux. Par ailleurs, il arrive que ces systèmes, s'ils permettent d'éviter l'éjection de la garniture ne la protègent pas suffisamment de sorte que des parties de la garniture peuvent être cassées et éjectées à l'intérieur de l'habitacle, ce qui n'est pas souhaitable non plus.

Il existe donc un besoin pour un dispositif de fixation permettant à la fois le maintien d'une partie au moins d'un dispositif de rideau gonflable et d'une pièce d'habillage, et le déploiement du rideau gonflable sans détérioration, ni décrochage de la pièce d'habillage.

A cet effet, un premier objet de l'invention concerne un dispositif de fixation d'une garniture sur une structure de caisse d'un véhicule automobile, notamment un montant de baie, ledit dispositif de fixation comprenant une agrafe conformée pour loger au moins une partie d'un dispositif de rideau gonflable, dans lequel l'agrafe comprend :
- une première partie d'agrafe pourvue d'éléments de fixation à la structure de caisse,
- une deuxième partie d'agrafe pourvue d'éléments de fixation à la garniture,
- les deux parties d'agrafe étant reliées l'une à l'autre par des organes d'articulation et des organes de verrouillage agencés de sorte que le déploiement du rideau gonflable débraye les organes de verrouillage et fasse pivoter la deuxième partie d'agrafe par rapport à la première partie d'agrafe autour desdits organes d'articulation,
et dans lequel :
- les organes de verrouillage comprennent des pattes de verrouillage et des éléments de retenue des pattes de verrouillage engagés mutuellement dans une position fermée de l'agrafe, les pattes de verrouillage et les éléments de retenue étant solidaires de parties d'agrafe distinctes,
- les organes d'articulation comprennent au moins un crochet et au moins un contre-crochet engagés mutuellement dans une position ouverte de l'agrafe, maintenus en engagement mutuel par au moins une lame élastique et bloqués en rotation par au moins une butée, le crochet étant solidaire d'une partie d'agrafe, le contre-crochet, la lame élastique et la butée étant solidaires de l'autre partie d'agrafe, et
- le crochet forme une extrémité d'une patte de verrouillage, et, dans la position fermée de l'agrafe, le contre-crochet forme un élément de retenue de cette patte de verrouillage et est maintenu en engagement avec une zone de mise en prise de celle-ci par la lame élastique, cette zone de mise en prise étant située à une distance prédéterminée du crochet.

L'agencement des organes d'articulation de l'agrafe permet d'obtenir une ouverture plus importante que celle qui résulterait d'une simple rotation des deux parties d'agrafe, ce qui facilite la sortie du rideau gonflable en réduisant les forces subies par la deuxième partie d'agrafe. En effet, lors du débrayage des organes de verrouillage, il se produit, au niveau des organes d'articulation et lors de la rotation, un déplacement des deux parties d'agrafe égal à la distance séparant l'extrémité formant crochet de la partie de mise en prise de la patte de verrouillage formant le crochet. Autrement dit, la deuxième partie d'agrafe pivote tout en s'écartant de la première partie d'agrafe.

Par ailleurs, grâce à la configuration en deux parties de l'agrafe, la deuxième partie d'agrafe fixée à la garniture forme un renfort et une protection à la garniture lors du déploiement du rideau gonflable. La garniture n'est ainsi plus directement en contact avec le dispositif de rideau gonflable. Sa fixation à la deuxième partie d'agrafe la rigidifie et réduit davantage les risques de casse.

En outre, cette configuration en deux parties permet de réaliser des organes de verrouillage et d'articulation sûrs et de manière économique dans la mesure où ces organes sont solidaires de parties d'agrafe et non d'une pièce d'habillage de relativement grande dimension tel qu'une garniture de montant de baie. Il est également possible de prévoir des matériaux et/ou des structures différents pour les deux parties d'agrafe en fonction de la résistance requise pour les différentes pièces.

De manière générale, dans une position d'utilisation de l'agrafe fixée à une structure de caisse, la deuxième partie d'agrafe peut pivoter par rapport à une direction sensiblement parallèle à un plan défini par la structure de caisse, par exemple sensiblement parallèle à une direction longitudinale de la structure de caisse.

Avantageusement, les organes de verrouillage peuvent être disposés à des extrémités opposées des deux parties d'agrafe, notamment suivant une direction longitudinale de l'agrafe. En position d'utilisation de l'agrafe, cette direction longitudinale peut être définie comme une direction sensiblement perpendiculaire à une direction longitudinale de la structure de caisse.

On peut avantageusement prévoir à une extrémité de l'agrafe uniquement un ou plusieurs organes de verrouillage, par exemple deux, notamment au niveau d'une extrémité inférieure en position d'utilisation de l'agrafe, et à l'autre extrémité de l'agrafe, un organe d'articulation, notamment au niveau d'une extrémité supérieure dans la position d'utilisation de l'agrafe.

Avantageusement, les organes d'articulation peuvent comprendre deux butées situées de part et d'autre d'une lame élastique. Ceci peut stabiliser la deuxième partie d'agrafe lors de son ouverture. Ceci peut également améliorer le maintien de l'engagement entre le crochet et le contre-crochet.

Avantageusement, des lames élastiques peuvent maintenir les pattes de verrouillage dépourvues de crochet en engagement avec les éléments de retenue autres que des contre-crochets, ces lames élastiques étant solidaires de la partie d'agrafe portant les éléments de retenue. Ceci peut favoriser le verrouillage en position fermée de l'agrafe.

En particulier, les lames élastiques des pattes de verrouillage peuvent être reliées à la partie d'agrafe par une zone de matière amincie. Ceci peut faciliter le débrayage des organes de verrouillage lors du déploiement du rideau gonflable.

Avantageusement, la deuxième partie d'agrafe peut comprendre des zones de rigidité différente, les organes d'articulation étant solidaires d'une zone moins rigide qu'une zone solidaire des pattes de verrouillage dépourvues de crochet. La rigidité moindre à proximité des organes d'articulation peut permettre de faciliter l'ouverture de l'agrafe alors que la rigidité plus importante peut permettre d'améliorer la fonction de renfort et de protection de la garniture assurée par la deuxième partie d'agrafe.

Par exemple, la zone de rigidité moindre peut comprendre une paroi dépourvue de nervures de rigidification, présentant une forme suivant sensiblement la forme de la garniture à laquelle elle est destinée à être fixée. La zone de rigidité plus importante peut être une paroi structurée comportant par exemples un ou plusieurs renforts choisis parmi des nervures perpendiculaires à sa surface, des zones concaves et des zones convexes.

Avantageusement, la deuxième partie d'agrafe peut comprendre une zone définissant une surface formant une rampe s'étendant jusqu'à un bord de la deuxième partie d'agrafe, la surface présentant une forme apte à guider une partie du dispositif de rideau gonflable suivant une direction longitudinale de la deuxième partie d'agrafe jusqu'au-delà dudit bord de la deuxième partie d'agrafe lors du déploiement du rideau gonflable. Ceci peut favoriser la protection de la garniture lors du déploiement du rideau gonflable, notamment lorsque la deuxième partie d'agrafe est configurée pour recouvrir entièrement un bord d'extrémité de la garniture, notamment dans une zone proche des pattes de verrouillage dépourvues de crochet. Avantageusement, ledit bord de la deuxième partie d'agrafe peut être un bord opposé à un bord pourvu de l'organe d'articulation.

L'invention concerne également un sous-ensemble d'habillage intérieur de véhicule automobile comprenant une garniture de montant de baie et un dispositif de fixation selon l'invention dans lequel la première partie d'agrafe est fixée au montant de baie et la garniture est fixée uniquement à la deuxième partie d'agrafe. La garniture, renforcée et protégée par la deuxième partie d'agrafe, n'est ainsi plus directement reliée au montant de baie et n'est plus en contact avec le dispositif de rideau gonflable, ce qui permet de limiter les risques de casse de la garniture lors du déploiement de ce dernier.

Notamment, le montant de baie, respectivement la garniture, peuvent comporter des éléments de fixation coopérant avec les éléments de fixation de la première partie d'agrafe, respectivement la deuxième partie d'agrafe.

Avantageusement, on peut prévoir pour la garniture au moins un élément de fixation supérieur, par exemple au niveau des organes d'articulation, et au moins un élément de fixation inférieur, notamment au niveau d'un bord inférieur de la garniture. Pour un meilleur maintien, deux éléments de fixation inférieurs peuvent être prévus, notamment situés à une même distance d'un bord inférieur de la garniture.

Avantageusement, on peut prévoir pour le montant de baie au moins un élément de fixation supérieur, par exemple au niveau des organes d'articulation, et au moins un autre élément de fixation distant de l'élément de fixation supérieur.

Avantageusement, pour une meilleure protection de la garniture lors du déploiement du rideau gonflable, la deuxième partie d'agrafe peut recouvrir entièrement, ou presque entièrement, un bord d'extrémité de la garniture. Notamment, la deuxième partie d'agrafe peut recouvrir entièrement une zone du bord d'extrémité contre laquelle frotte une partie du rideau gonflable lors du déploiement du rideau gonflable. En général, la partie du rideau gonflable qui frotte sur cette zone est la partie montée sous la garniture de montant de baie.

Avantageusement, pour un meilleur aspect, le sous-ensemble peut comporter des organes d'indexage solidaires de la deuxième partie d'agrafe et de la garniture configurés pour assurer le positionnement relatif de ces pièces.. En particulier, ils peuvent être disposés entre deux éléments de fixation inférieurs de la deuxième partie d'agrafe à la garniture.

L'invention a également pour objet un véhicule automobile comportant un montant de baie, un dispositif de rideau gonflable comportant un rideau gonflable et une sangle de retenue, et au moins un sous-ensemble d'habillage selon l'invention.

L'invention est maintenant décrite en référence aux dessins annexés, non limitatifs, dans lesquels :
la figure 1 représente une vue en perspective d'un montant de baie montrant une partie d'un dispositif de rideau gonflable et un dispositif de fixation selon un mode de réalisation de l'invention,
la figure 2 représente une vue de face d'une première partie d'agrafe,
la figure 3 représente une section selon les lignes A-A de la figure 2 (les deux sections sont identiques),
la figure 4 représente une vue en perspective d'une deuxième partie d'agrafe,
la figure 5 représente une vue en perspective de la partie inférieure de la deuxième partie d'agrafe du côté destiné à être fixé à une garniture,
la figure 6 représente une section du montant de baie selon la ligne B-B de la figure 2,
la figure 7 représente une section du montant de baie selon la ligne C-C de la figure 1,
la figure 8 représente une section similaire à celle de la figure 6 après ouverture de l'agrafe.

Dans la présente description, les termes avant, arrière, supérieur, inférieur, font référence aux directions avant et arrière du véhicule, au haut et bas du véhicule, lorsque le montant de baie, le dispositif de fixation et la garniture de montant de baie sont montés sur le véhicule. Les axes X, Y, Z, correspondent respectivement à l'axe longitudinal (d'avant en arrière), transversal et vertical du véhicule, ce dernier reposant sur le sol. La direction verticale correspond ainsi à la direction de la gravité.

Par sensiblement horizontal, longitudinal ou vertical, on entend une direction/un plan formant un angle d'au plus ±20°, voire d'au plus 10°, avec une direction/un plan horizontal, longitudinal ou vertical.

Dans ce qui suit, on va décrire un dispositif de fixation selon l'invention d'une garniture sur une structure de caisse qui forme un montant de baie, ici un pare-brise, application pour laquelle il est particulièrement adapté. L'invention n'est toutefois pas limitée à ce type de montant de baie, la baie pouvant être une lunette arrière de véhicule automobile, ni à une structure de caisse qui forme un montant de baie.

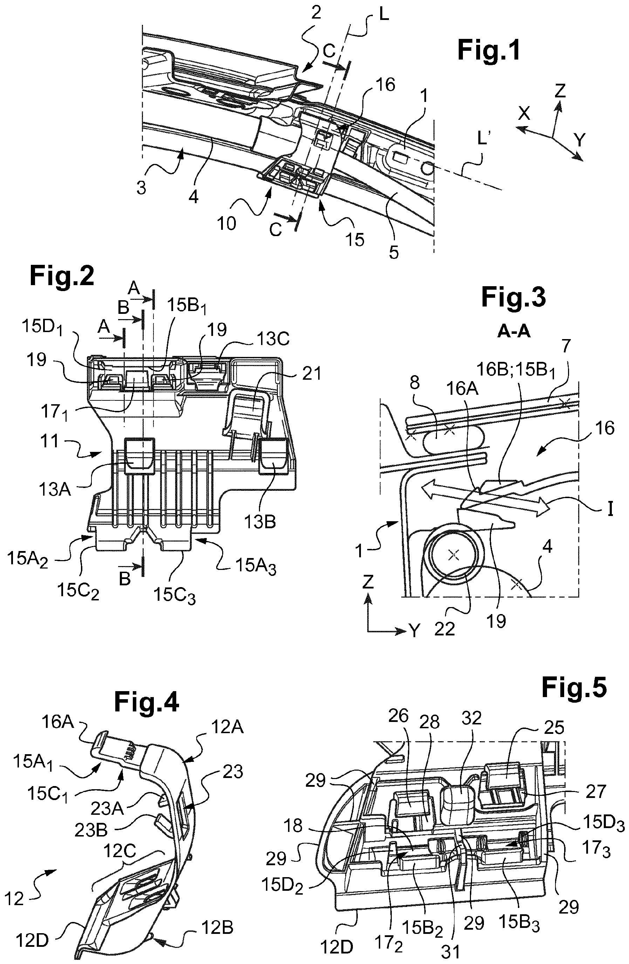

La figure 1 représente partiellement un montant de baie 1, le pavillon 2 d'un véhicule et un dispositif de rideau gonflable 3. Le dispositif de rideau gonflable 3 comprend notamment le rideau gonflable 4 dans une position repliée ici, enroulé sur lui-même, et une sangle de retenue 5. Cette sangle de retenue 5 est interposée entre le montant de baie 1 et le rideau 4 afin de maintenir ce dernier en place lors de son déploiement. De manière usuelle, le rideau 4 s'étend sur les parties supérieures des portières avant et arrière du véhicule (non représentées) et il est destiné à protéger latéralement les passagers en cas d'accident. Dans l'exemple représenté, le rideau 4 s'étend également en partie au niveau du montant de baie 1 alors que la sangle 5 s'étend quasiment uniquement le long du montant de baie 1.

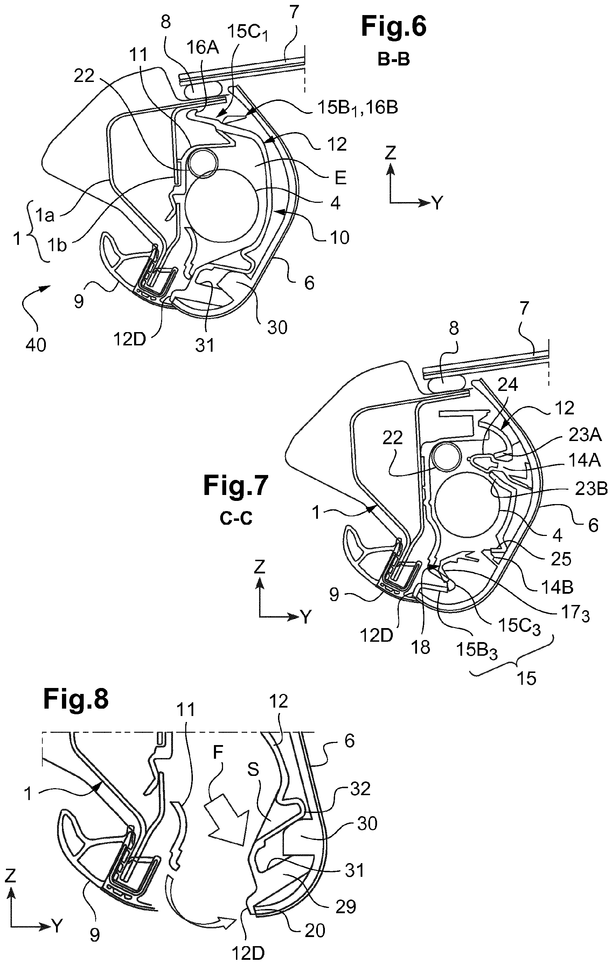

Le montant de baie 1 est ici formé par assemblage de deux parties 1a, 1b, généralement en tôle. Sur les figures 3 et 6 à 8, on distingue le pare-brise 7 ainsi que des joints 8 et 9 respectivement entre le pare-brise 7 et le montant de baie 1 et entre le montant de baie 1 et une garniture 6 du montant de baie 1 (visible uniquement sur les figures 6 à 8).

Un dispositif de fixation 10 permet de fixer le dispositif de rideau gonflable au montant de baie 1. Ici, le dispositif de fixation 10 est disposé à proximité immédiate du pavillon 2, sur le montant de baie 1. Le dispositif de fixation 10 forme ici une agrafe conformée pour loger au moins en partie le rideau 4 et la sangle de retenue 5. Le dispositif de fixation 10, le montant de baie 1 et la garniture 6 forment un sous-ensemble 40 d'habillage intérieur de véhicule automobile.

Selon l'invention, l'agrafe 10 comprend une première partie 11 pourvue d'éléments de fixation 13 au montant de baie 1 et une deuxième partie 12 pourvue d'éléments de fixation 14A, 14B à la garniture 6.

Les deux parties d'agrafe 11 et 12 sont reliées l'une à l'autre par des organes de verrouillage 15 et des organes d'articulation 16. Lorsque les deux parties d'agrafe 11 et 12 sont assemblées, dans une position dans laquelle l'agrafe est fermée tel que représenté sur les figures 1, 6, 7, elles définissent entre elles un espace E recevant le rideau 4 et la sangle 5 (fig.6, 7). Lors du déploiement du rideau 4, ce dernier exerce une pression sur les organes de verrouillage 15 provoquant leur débrayage et l'ouverture de l'agrafe. Dans la position ouverte de l'agrafe qui résulte du déploiement du rideau 4 (fig.8), les deux parties d'agrafe 11, 12 ne sont retenues l'une à l'autre que par les organes d'articulation 16.

Autrement dit, les organes d'articulation 16 et les organes de verrouillage 15 sont agencés de sorte que le déploiement du rideau gonflable 4 débraye les organes de verrouillage 15 et fasse pivoter la deuxième partie d'agrafe 12 par rapport à la première partie d'agrafe 11 autour des organes d'articulation 16.

Dans l'exemple, les organes de verrouillage 15 sont disposés à des extrémités opposées de l'agrafe suivant une direction longitudinale L de celle-ci (fig.1). Cette direction longitudinale L s'étend sensiblement perpendiculairement à la direction longitudinale L' du montant de baie 1.

Les organes de verrouillage 15 comprennent des pattes de verrouillage 15Aᵢ et des éléments de retenue 15Bᵢ des pattes de verrouillage engagés mutuellement dans la position fermée de l'agrafe, où i, nombre entier non nul, représente le nombre de pattes de verrouillage. Chaque patte de verrouillage 15Aᵢ est solidaire de l'une des parties d'agrafe, tandis que l'élément de retenue 15Bᵢ correspondant est solidaire de l'autre partie d'agrafe. Dans l'exemple représenté, les organes de verrouillage 15 comprennent une patte de verrouillage 15A₁ supérieure et deux pattes de verrouillage 15A₂, 15A₃ inférieures. La patte de verrouillage supérieure 15A₁ est solidaire de la deuxième partie d'agrafe 12 alors que les pattes de verrouillage inférieures 15A₂, 15A₃ sont solidaires de la première partie d'agrafe 11.

Chaque patte de verrouillage 15Aᵢ comprend une partie de mise en prise 15Cᵢ configurée pour coopérer avec un élément de retenue 15Bᵢ. Cette partie de mise en prise 15Cᵢ peut se présenter sous la forme d'un bourrelet 15C₂, 15C₃, notamment à une extrémité de la patte de verrouillage, tel que visible sur les pattes de verrouillage inférieures 15A₂, 15A₃ (figures 2 et 7), ou encore sous la forme d'un épaulement 15C₁, notamment à distance de l'extrémité de la patte de verrouillage, tel que visible figures 3 et 4 pour la patte verrouillage supérieure 15A₁.

Les éléments de retenue 15Bᵢ peuvent se présenter sous la forme d'une butée prenant appui sur la partie de mise en prise 15Cᵢ d'une patte de verrouillage. Ces éléments de retenue 15Bᵢ peuvent être formés par un bord d'une ouverture 15Dᵢ ménagée au travers de la partie d'agrafe correspondante (fig. 2, 3, 5, 7). Des lames élastiques 17ᵢ peuvent alors permettre d'améliorer le maintient des pattes de verrouillage 15Aᵢ en contact contre les éléments de retenue 15Bᵢ.

Dans l'exemple représenté, les pattes de verrouillage inférieures 15A₂, 15A₃, solidaires de la première partie d'agrafe 11, sont respectivement maintenues en appui contre les éléments de retenue 15B₂, 15B₃ solidaires de la deuxième partie agrafe 12 par des lames élastiques 17₂, 17₃ qui sont également solidaires de la deuxième partie d'agrafe 12. Plus précisément, la deuxième partie agrafe 12 présente des ouvertures 15D₂, 15D₃, dont un bord inférieur forme un élément de retenue 15B₂, 15B₃ et dont au bord supérieur desquelles la lame élastique 17₂, 17₃ est reliée. Cette dernière se présente par exemple sous la forme d'une patte reliée à la deuxième partie d'agrafe 12 par une zone de matière amincie 18 la rendant élastique. Cette zone de matière amincie 18 forme également une charnière pour la lame 17₂, 17₃. Ainsi, lorsque le rideau 4 se déploie et exerce une pression sur la deuxième partie agrafe 12 suivant la direction de la flèche F fig.8, chaque lame élastique 17₂, 17₃ pivote autour de la charnière 18 dans une direction opposée aux pattes de verrouillage inférieures 15A₂, 15A₃, facilitant le dégagement de celle-ci de l'élément de retenue 15B₂, 15B₃ correspondant et le débrayage de l'organe de verrouillage. La deuxième partie agrafe 12 libérée en partie inférieure peut s'ouvrir et laisser le passage au rideau 4 en cours de déploiement.

Les organes d'articulation 16 sont maintenant décrits. Ils comprennent quant à eux au moins un crochet 16A et un contre crochet 16B associés et engagés mutuellement dans la position ouverte de l'agrafe. Tel qu'on peut le voir sur les figures 3 et 4, le crochet 16A forme une extrémité de la patte de verrouillage supérieure 15A₁, la partie de mise en prise 15C₁ de cette patte de verrouillage supérieure 15A₁ étend située à une distance prédéterminée de l'extrémité en forme de crochet. Cette distance pourra être choisie de manière à obtenir un écartement des deux parties d'agrafe suffisant pour laisser sortir le rideau 4 lors de son déploiement. Dans l'exemple, le crochet 16A est recourbé vers le haut, en direction de la garniture 6 lorsqu'elle est fixée à la deuxième partie d'agrafe. Un tel agencement facilite la retenue du crochet en fin d'ouverture de l'agrafe.

Dans la position ouverte de l'agrafe, le crochet 16A est maintenu en engagement avec le contre crochet 16B par la lame élastique 17₁ et bloqué en rotation par deux butées 19 disposées de part et d'autre de la lame élastique 17₁. On notera que le contre crochet 16B, les butées 19 et la lame élastique 17₁ sont solidaires de la première partie d'agrafe 11, le contre crochet 16B étant situé en regard de la lame élastique 17₁ et des butées 19. Cet agencement des butées par rapport à la lame élastique assure un bon maintien du crochet, d'autres agencements pourraient toutefois être envisagés, comprenant par exemple une seule butée.

Dans l'exemple, présente l'ouverture 15D₁ de la première partie agrafe 11 présente un bord, ici le bord supérieur, formant le contre crochet 16B (mais aussi l'élément de retenue 15B₁) et l'autre bord, ici le bord inférieur, est pourvu des butées 19 et de la lame élastique 17₁. La distance séparant les butées 19 du contre crochet 16B est suffisante pour permettre l'insertion de la patte de verrouillage 15A₁ pourvue du crochet 16A au travers de l'ouverture de la première partie agrafe dans une direction d'insertion I représentée symboliquement sur la figure 3. Lorsque la patte de verrouillage supérieure 15A₁ est insérée, la lame élastique 17₁ exerce une force sur la patte de verrouillage supérieure 15A₁ la poussant vers le contre crochet 16B, 15B₁ de sorte que ce dernier est engagé avec la partie de mise en prise 15C₁ de la patte de verrouillage (figure 6).

Lors du débrayage des pattes de verrouillage inférieures 15A₂, 15A₃, la pression exercée par le rideau 4 sur ces dernières entraîne le déplacement de la deuxième partie agrafe 12 vers le bas suivant la direction de la flèche F de sorte que la patte de verrouillage supérieure 15A₁ appuie sur la lame élastique 17₁, libérant ainsi la partie de mise en prise 15C₁ du contre crochet 16B. La deuxième partie agrafe 12 peut alors continuer son déplacement dans la direction de la flèche F jusqu'à ce que le crochet 16A vienne en prise avec le contre crochet 16B. Le déploiement du rideau provoquant en outre une rotation de la deuxième partie d'agrafe 12 jusqu'à une position dans laquelle la patte de verrouillage supérieure 15A₁ est bloquée en rotation par les butées 19 (figure 3). Dans cette position, la deuxième partie d'agrafe 12 ne peut pas se dégager de la première partie agrafe 11, de sorte que la garniture 6 fixée à la deuxième partie agrafe 12 reste solidaire du montant de baie 1.

La deuxième partie d'agrafe 12 comprend par ailleurs des zones 12A, 12B de rigidité différente afin de faciliter l'ouverture de l'agrafe, notamment de manière suffisante pour la sortie du rideau 4 hors de l'agrafe.

En particulier, les organes d'articulation 16 sont solidaires d'une zone moins rigide 12A qu'une zone solidaire des pattes de verrouillage 15A₂, 15A₃ dépourvues de crochet. Autrement dit, la deuxième partie agrafe 12 présente une partie supérieure proche des organes d'articulation 16 moins rigide qu'une partie inférieure supportant les organes de verrouillage 15. Ainsi, lors de l'ouverture de l'agrafe, la zone de moindre rigidité 12A aura tendance à se déformer alors que la zone de plus grande rigidité 12 B ne se déformera pas, assurant ainsi un renfort efficace à la garniture 6.

La deuxième partie d'agrafe 12 comporte par ailleurs une zone 12C définissant une surface S formant une rampe s'étendant jusqu'à un bord 12D de la deuxième partie d'agrafe 12 (fig.4, 8). Cette surface S présente une forme apte à guider une partie du dispositif de rideau gonflable 3 (le rideau 4 et/ou la sangle de retenue 5) jusqu'au-delà du bord 12D de la deuxième partie agrafe lors du déploiement du rideau gonflable 4. Tel que visible sur la figure 8, cette surface S est sensiblement plane au moins au niveau des éléments de fixation 14A, 14B de la garniture et des organes d'indexage 30.

Tel que visible sur les figures 6 à 8, la deuxième partie agrafe 12 recouvre entièrement un bord d'extrémité 20, notamment inférieur, de la garniture 6. Dans l'exemple représenté, le bord 12D de la deuxième partie agrafe 12 recouvre le bord d'extrémité 20. Plus précisément, ce bord d'extrémité 20 est en butée contre le bord 12D, par exemple de sorte que la deuxième partie d'agrafe 12 recouvre le coin inférieur de la garniture 6 (dirigé vers le rideau gonflable) et une portion de 30 à 80 millimètres du bord d'extrémité de la garniture 6 contre lesquels sort en frottant la partie du rideau gonflable montée sous la garniture de montant de baie. Ainsi, lors de l'ouverture de l'agrafe, la garniture 6 reste fixée à la deuxième partie agrafe 12 au niveau d'une extrémité supérieure (au niveau de l'organe d'articulation 16) alors que sa partie inférieure est entièrement renforcée et protégée par la deuxième partie agrafe 12, dont la surface S de la rampe 12C guide en outre le rideau 4 et/ou la sangle 5 vers l'extérieur de l'agrafe, sans risque d'accroche avec la garniture 6. Le rideau 4 peut ainsi se déployer sans risquer de décrocher ou de casser la garniture 6.

Tel que précédemment mentionné, la première partie agrafe 11 est pourvue d'éléments de fixation 13 au montant de baie 1. Dans l'exemple représenté, il s'agit de pattes de fixation 13A, 13B, 13C agencées pour venir en prise avec des orifices correspondants du montant de baie 1. Deux de ces pattes de fixation 13A, 13B sont situées sensiblement à la même distance d'un bord supérieur de la première partie agrafe 11. La troisième patte 13C est située à côté de l'ouverture 15D₁. On notera ainsi que les pattes 13A, 13B sont situées sensiblement au niveau du rideau 4 et/.ou de la sangle 5, ce qui peut favoriser le maintien de la première agrafe au montant de baie lors du déploiement du rideau 4. On notera également la présence d'une patte 21 solidaire de la première partie agrafe 11 permettant le maintien d'un tuyau ou câble 22 dans l'espace E (fig.2, 3, 6, 8). Ceci est particulièrement avantageux compte tenu de l'encombrement réduit disponible entre le montant de baie 1 et la garniture 6.

La deuxième partie agrafe 12 est quant à elle pourvue d'éléments de fixation 14A, 14B à la garniture 6. Dans l'exemple, trois éléments de fixation 14A, 14B, 14B sont prévus. Un premier élément de fixation 14A se présente sous la forme d'un clip de fixation conformé pour s'insérer dans une ouverture correspondante 23 de la deuxième partie agrafe (Fig 7), dont les bords 23A, 23B forment des lames élastiques prenant appui de part et d'autre d'une extrémité élargie 24 du clip de fixation 14A. Ceci permet d'obtenir une fixation relativement robuste. On notera que dans l'exemple représenté, cet élément de fixation 14A est situé entre la zone de moindre rigidité 12A et la zone plus rigide 12B de la deuxième partie agrafe. Ainsi, lors du déploiement du rideau 4, la zone de fixation du clip 14A n'est pas déformée, réduisant les risques de désolidarisation de la garniture. Deux éléments de fixation 14B sont en outre prévus sur la garniture sensiblement en regard de la zone de rigidité plus importante 12B de la deuxième partie d'agrafe. Il s'agit de pattes de fixation 14B présentant un bourrelet à leur extrémité libre qui vient en prise avec une extrémité de pattes 25, 26 prévues sur la deuxième partie d'agrafe 12 (fig.5, 7). Ces pattes 25, 26 sont ici situées au-dessus des organes de verrouillage 15 inférieurs de la deuxième partie d'agrafe. Dans l'exemple représenté, ces pattes 25, 26 sont rattachées au bord supérieur d'ouvertures 27, 28 respectivement de la première partie d'agrafe 11 (fig.5).

Bien entendu, l'invention n'est pas limitée à l'agencement particulier des éléments de fixation décrit en référence aux figures, ni à un nombre particulier de ceux-ci, pourvu que l'agrafe puisse être fixée au montant de baie et à la garniture.

Tel que visible sur la figure 5, la deuxième partie agrafe présente en outre de nombreuses nervures 29 perpendiculaires à sa surface qui participent à la rigidité de la zone 12B de la deuxième partie agrafe 12. Ces nervures peuvent également définir la surface S de la rampe 12C.

Enfin, des organes d'indexage 30, 31 sont prévus pour assurer le positionnement relatif de la garniture 6 et de la deuxième partie d'agrafe 12.

Dans l'exemple représenté, il s'agit d'un doigt 30 solidaire la garniture (en particulier réaliser d'une pièce avec celle-ci) venant s'insérer dans un logement 31 prévu à cet effet de la deuxième partie agrafe 12. Dans l'exemple, le doigt 30 vient en appui contre les bords inférieur et supérieur du logement 31 assurant un positionnement de la garniture 6 suivant la direction longitudinale de l'agrafe. Ici, le logement 31 est défini par une nervure 29 et un renflement 32 de la deuxième partie agrafe. Ces divers éléments participent également à la rigidité de la zone 12B. L'invention n'est pas limitée par la forme et le nombre des organes d'indexage, ceux-ci étant disposés de préférence au niveau de la zone 12B de la deuxième partie d'agrafe.

Autrement dit, les divers éléments (organes de verrouillage 15, ouverture 23, pattes de fixation 25, 26, nervures 29, renflement 32) disposés au niveau de la zone 12B de la deuxième partie agrafe confèrent à cette zone une certaine rigidité, suffisante pour lui permettre d'assurer son rôle de renfort de garniture, et plus importante que la rigidité de la zone 12A, laquelle est dépourvue de tout élément de fixation. Le fait que la patte de verrouillage 15A₁ s'étende dans le prolongement de la paroi formant la zone 12A participe à la souplesse de la zone contrairement à la forme très structurée de la partie inférieure de la deuxième partie d'agrafe 12. Il est ainsi préférable de positionner les éléments de fixation à la garniture, mais aussi les organes de verrouillage, et éventuellement les organes d'indexage et la rampe au niveau de la zone 12B de la deuxième partie d'agrafe, dans la partie inférieure de celle-ci.

Le dispositif de fixation selon l'invention permet ainsi d'assurer une fixation sûre et économique de la garniture. Il peut en outre être réalisé de manière relativement simple. Notamment, chaque partie d'agrafe peut être réalisée d'une pièce en matériau polymère, par exemple par moulage.

## Revendications

1. Dispositif de fixation (10) d'une garniture (6) sur une structure de caisse (1) d'un véhicule automobile, ledit dispositif de fixation comprenant une agrafe conformée pour loger au moins une partie d'un dispositif de rideau gonflable (3), dans lequel l'agrafe comprend :
- une première partie d'agrafe (11) pourvue d'éléments de fixation (13) à la structure de caisse (1),
- une deuxième partie d'agrafe (12) pourvue d'éléments de fixation (14A, 14B) à la garniture (6),
- les deux parties d'agrafe (11, 12) étant reliées l'une à l'autre par des organes de verrouillage (15) et des organes d'articulation (16) agencés de sorte que le déploiement d'un rideau gonflable (4) débraye les organes de verrouillage (15) et fasse pivoter la deuxième partie d'agrafe (12) par rapport à la première partie d'agrafe (11) autour desdits organes d'articulation (16),
et dans lequel :
- les organes de verrouillage (15ᵢ) comprennent des pattes de verrouillage (15Aᵢ) et des éléments de retenue (158ᵢ) des pattes de verrouillage engagés mutuellement dans une position fermée de l'agrafe, les pattes de verrouillage (15Aᵢ) et les éléments de retenue (15Bᵢ) étant solidaires de parties d'agrafe distinctes,
- les organes d'articulation (16) comprennent au moins un crochet (16A) et au moins un contre-crochet (16B) engagés mutuellement dans une position ouverte de l'agrafe, maintenus en engagement mutuel par au moins une lame élastique (17ᵢ) et bloqués en rotation par au moins une butée (19), le crochet (16A) étant solidaire d'une partie d'agrafe, le contre-crochet (16B), la lame élastique (17ᵢ) et la butée (19) étant solidaires de l'autre partie d'agrafe, et
- le crochet (16A) forme une extrémité d'une patte de verrouillage (15A₁), et, dans la position fermée de l'agrafe, le contre-crochet (16B) forme un élément de retenue (15B₁) de cette patte de verrouillage et est maintenu en engagement avec une zone de mise en prise (15C₁) de celle-ci par la lame élastique (17ᵢ), cette zone de mise en prise (15C₁) étant située à une distance prédéterminée du crochet (16A).

2. Dispositif de fixation (10) selon la revendication 1, **caractérisé en ce que** les organes d'articulation (16) comprennent deux butées (19) situées de part et d'autre d'une lame élastique (17₁).

3. Dispositif de fixation (10) selon la revendication 1 ou 2, **caractérisé en ce que** des lames élastiques (17₂, 17₃) maintiennent les pattes de verrouillage (15A₂, 15A₃) dépourvues de crochet en engagement avec les éléments de retenue (15B₂, 15B₃) autres que des contre-crochets, ces lames élastiques (17₂, 17₃) étant solidaires de la partie d'agrafe portant les éléments de retenue (15B₂, 15B₃).

4. Dispositif de fixation (10) selon la revendication 3, **caractérisé en ce que** les lames élastiques des pattes de verrouillage (17₂, 17₃) sont reliées à la partie d'agrafe par une zone de matière amincie (18).

5. Dispositif de fixation (10) selon l'une quelconque des revendications 1 à 4, **caractérisé en ce que** la deuxième partie d'agrafe (12) comprend des zones (12A, 12B) de rigidité différente, les organes d'articulation (16) étant solidaires d'une zone (12A) moins rigide qu'une zone (12B) solidaire des pattes de verrouillage (15A₂, 15A₃) dépourvues de crochet.

6. Dispositif de fixation (10) selon l'une quelconque des revendications 1 à 5, **caractérisé en ce que** la deuxième partie d'agrafe (12) comprend une zone (12C) définissant une surface (S) formant une rampe s'étendant jusqu'à un bord (12D) de la deuxième partie d'agrafe, la surface présentant une forme apte à guider une partie du dispositif de rideau gonflable suivant une direction longitudinale de la deuxième partie d'agrafe jusqu'au-delà dudit bord de la deuxième partie d'agrafe lors du déploiement du rideau gonflable.

7. Sous-ensemble (40) d'habillage intérieur de véhicule automobile comprenant une garniture (6) de montant de baie (1) et un dispositif de fixation (10) selon l'une quelconque des revendications 1 à 6, **caractérisé en ce que** la première partie d'agrafe (11) est fixée au montant de baie (1) et **en ce que** la garniture (6) est fixée uniquement à la deuxième partie d'agrafe (12).

8. Sous-ensemble (40) d'habillage selon la revendication 7, **caractérisé en ce que** la deuxième partie d'agrafe (12) recouvre entièrement un bord d'extrémité (20) de la garniture (6).

9. Sous-ensemble (40) d'habillage selon la revendication 7 ou 8, **caractérisé en ce qu'**il comporte des organes d'indexage (30, 31) solidaires de la deuxième partie d'agrafe (12) et de la garniture (6) configurés pour assurer le positionnement relatif de ces pièces.

10. Véhicule automobile comportant un montant de baie (1), un dispositif de rideau gonflable (3) comportant un rideau gonflable (4) et une sangle de retenue (5), et au moins un sous-ensemble (40) d'habillage selon l'une quelconque des revendications 7 à 9.

## Patentansprüche

1. Vorrichtung (10) zur Befestigung einer Verkleidung (6) an einer Karosseriestruktur (1) eines Kraftfahrzeugs, wobei die Befestigungsvorrichtung eine Klammer umfasst, die zur Aufnahme mindestens eines Teils einer Kopf-Airbag-Vorrichtung (3) ausgebildet ist, wobei die Klammer Folgendes umfasst:
- einen ersten Klammerteil (11), der mit Elementen (13) zur Befestigung an der Karosseriestruktur (1) versehen ist,
- einen zweiten Klammerteil (12), der mit Elementen (14A, 14B) zur Befestigung an der Verkleidung (6) versehen ist,
- wobei die beiden Klammerteile (11, 12) mittels Verriegelungsgliedern (15) und Gelenkgliedern (16) miteinander verbunden sind, die derart angeordnet sind, dass durch das Entfalten eines Kopf-Airbags (4) die Verriegelungsglieder (15) blockiert werden und der zweite Klammerteil (12) bezüglich des ersten Klammerteils (11) um die Gelenkglieder (16) geschwenkt wird,
und wobei:
- die Verriegelungsglieder (15ᵢ) Verriegelungslaschen (15Aᵢ) und Elemente (15Bᵢ) umfassen, um die Verriegelungslaschen in gegenseitigem Eingriff in einer geschlossenen Position der Klammer zu halten, wobei die Verriegelungslaschen (15Aᵢ) und die Halteelemente (15Bᵢ) fest mit separaten Klammerteilen verbunden sind,
- die Gelenkglieder (16) mindestens einen Haken (16A) und mindestens einen Gegenhaken (16B) umfassen, die in einer offenen Position der Klammer in gegenseitigem Eingriff stehen und mittels mindestens einer elastischen Zunge (17ᵢ) in gegenseitigem Eingriff gehalten werden und mittels mindestens eines Anschlags (19) gegen Drehung gesichert werden, wobei der Haken (16A) fest mit einem Klammerteil verbunden ist und der Gegenhaken (16B), die elastische Zunge (17ᵢ) und der Anschlag (19) fest mit dem anderen Klammerteil verbunden sind, und
- der Haken (16A) ein Ende einer Verriegelungslasche (15Aᵢ) bildet und der Gegenhaken (16B) in der geschlossenen Position der Klammer ein Element (15Bᵢ) zum Halten dieser Verriegelungslasche bildet und mittels der elastischen Zunge (17ᵢ) in Eingriff mit einem Eingriffsbereich (15C₁) davon gehalten wird, wobei der Eingriffsbereich (15C₁) mit einem vorbestimmten Abstand von dem Haken (16A) angeordnet ist.

2. Befestigungsvorrichtung (10) nach Anspruch 1, **dadurch gekennzeichnet, dass** die Gelenkglieder (16) zwei Anschläge (19) umfassen, die beiderseits einer elastischen Zunge (17₁) angeordnet sind.

3. Befestigungsvorrichtung (10) nach Anspruch 1 oder 2, **dadurch gekennzeichnet, dass** elastische Zungen (17₂, 17₃) die Verriegelungslaschen (15A₂, 15A₃) ohne Haken in Eingriff mit den Halteelementen (15B₂, 15B₃) abgesehen von Gegenhaken halten, wobei diese elastischen Zungen (17₂, 17₃) fest mit dem die Halteelemente (15B₂, 15B₃) tragenden Klammerteil verbunden sind.

4. Befestigungsvorrichtung (10) nach Anspruch 3, **dadurch gekennzeichnet, dass** die elastischen Zungen der Verriegelungslaschen (17₂, 17₃) über einen dünnen Materialbereich (18) mit dem Klammerteil verbunden sind.

5. Befestigungsvorrichtung (10) nach einem der Ansprüche 1 bis 4, **dadurch gekennzeichnet, dass** der zweite Klammerteil (12) Bereiche (12A, 12B) mit unterschiedlicher Steifigkeit umfasst, wobei die Gelenkglieder (16) fest mit einem Bereich (12A) verbunden sind, der weniger steif als ein Bereich (12B) ist, der fest mit Verriegelungslaschen (15A₂, 15A₃) ohne Haken verbunden ist.

6. Befestigungsvorrichtung (10) nach einem der Ansprüche 1 bis 5, **dadurch gekennzeichnet, dass** der zweite Klammerteil (12) einen Bereich (12C) umfasst, der eine Fläche (S) definiert, die eine Rampe bildet, die sich bis zu einem Rand (12D) des zweiten Klammerteils erstreckt, wobei die Fläche eine Form aufweist, die einen Teil der Kopf-Airbag-Vorrichtung beim Entfalten des Kopf-Airbags in einer Längsrichtung des zweiten Klammerteils bis über den Rand des zweiten Klammerteils hinaus führen kann.

7. Kraftfahrzeuginnenverblendungsunterbaugruppe (40), umfassend eine Verkleidung (6) einer Fenstersäule (1) und eine Befestigungsvorrichtung (10) nach einem der Ansprüche 1 bis 6, **dadurch gekennzeichnet, dass** der erste Klammerteil (11) an der Fenstersäule (1) befestigt ist und dass die Verkleidung (6) nur an dem zweiten Klammerteil (12) befestigt ist.

8. Verblendungsunterbaugruppe (40) nach Anspruch 7, **dadurch gekennzeichnet, dass** der zweite Klammerteil (12) einen Endrand (20) der Verkleidung (6) vollständig abdeckt.

9. Verblendungsunterbaugruppe (40) nach Anspruch 7 oder 8, **dadurch gekennzeichnet, dass** sie Positionierungsglieder (30, 31) aufweist, die fest mit dem zweiten Klammerteil (12) und der Verkleidung (6) verbunden und dazu ausgestaltet sind, die Relativpositionierung dieser Teile zu gewährleisten.

10. Kraftfahrzeug, aufweisend eine Fenstersäule (1), eine Kopf-Airbag-Vorrichtung (3), die einen Kopf-Airbag (4) und einen Haltegurt (5) aufweist, und mindestens eine Verblendungsunterbaugruppe (40) nach einem der Ansprüche 7 bis 9.

## Claims

1. Device (10) for attaching a trim (6) to a bodywork structure (1) of a motor vehicle, said attachment device comprising a clip shaped to accommodate at least one portion of an inflatable curtain device (3), wherein the clip comprises:
- a first clip portion (11) provided with attachment elements (13) for attaching to the bodywork structure (1) ;
- a second clip portion (12) provided with attachment elements (14A, 14B) for attaching to the trim (6);
- the two clip portions (11, 12) being connected together by locking components (15) and hinging components (16) arranged so that the deployment of an inflatable curtain (4) disengages the locking components (15) and causes the second clip portion (12) to pivot relative to the first clip portion (11) about said hinging components (16);
and wherein:
- the locking components (15ᵢ) comprise locking lugs (15Aᵢ) and retention elements (15Bᵢ) for keeping the locking lugs mutually engaged in a closed position of the clip, the locking lugs (15Aᵢ) and the retention elements (15Bᵢ) being secured to separate clip portions;
- the hinging components (16) comprise at least one hook (16A) and at least one opposing hook (16B) that are mutually engaged in an open position of the clip and are kept mutually engaged by at least one resilient strip (17ᵢ) and are rotationally blocked by at least one stop (19), the hook (16A) being secured to a clip portion, the opposing hook (16B), the resilient strip (17ᵢ) and the stop (19) being secured to the other clip portion; and
- the hook (16A) forms an end of a locking lug (15Aᵢ) and, in the closed position of the clip, the opposing hook (16B) forms a retention element (15Bᵢ) for this locking lug and is kept engaged with an engagement zone (15C₁) of said locking lug by the resilient strip (17ᵢ), with this engagement zone (15C₁) being located at a predetermined distance from the hook (16A).

2. Attachment device (10) according to Claim 1, **characterized in that** the hinging components (16) comprise two stops (19) located on either side of a resilient strip (17₁).

3. Attachment device (10) according to Claim 1 or 2, **characterized in that** resilient strips (17₂, 17₃) keep the locking lugs (15A₂, 15A₃) without a hook engaged with the retention elements (15B₂, 15B₃) aside from the opposing hooks, said resilient strips (17₂, 17₃) being secured to the clip portion supporting the retention elements (15B₂, 15B₃) .

4. Attachment device (10) according to Claim 3, **characterized in that** the resilient strips of the locking lugs (17₂, 17₃) are connected to the clip portion by a thin material zone (18).

5. Attachment device (10) according to any one of Claims 1 to 4, **characterized in that** the second clip portion (12) comprises zones (12A, 12B) with different rigidity, the hinging components (16) being secured to a zone (12A) that is less rigid than a zone (12B) secured to the locking lugs (15A₂, 15A₃) without a hook.

6. Attachment device (10) according to any one of Claims 1 to 5, **characterized in that** the second clip portion (12) comprises a zone (12C) defining a surface (S) forming a ramp extending up to an edge (12D) of the second clip portion, the surface having a shape capable of guiding a portion of the inflatable curtain device in a longitudinal direction of the second clip portion beyond said edge of the second clip portion during the deployment of the inflatable curtain.

7. Sub-assembly (40) for the interior lining of a motor vehicle comprising a trim (6) for a window post (1) and an attachment device (10) according to any one of Claims 1 to 6, **characterized in that** the first clip portion (11) is attached to the window post (1) and **in that** the trim (6) is only attached to the second clip portion (12).

8. Lining sub-assembly (40) according to Claim 7, **characterized in that** the second clip portion (12) completely covers an end edge (20) of the trim (6).

9. Lining sub-assembly (40) according to Claim 7 or 8, **characterized in that** it comprises indexing components (30, 31) secured to the second clip portion (12) and the trim (6) configured to ensure the relative positioning of these parts.

10. Motor vehicle comprising a window post (1), an inflatable curtain device (3) comprising an inflatable curtain (4) and a retention strap (5), and at least one lining sub-assembly (40) according to any one of Claims 7 to 9.
